# EUROPEAN PATENT APPLICATION

(11) **EP 4 699 904 A1**
(43) Date of publication of application: **25.02.2026**
(21) Application number: 25195023.4
(22) Date of filing: 11.08.2025
(51) Int. Cl.: B62D 21/18, B62D 49/06

(54) **HIGH MOBILITY ROBOT WITH ARTICULATED CHASSIS**

(30) Priority: 20.08.2024 US 202418809797
(71) Applicant: Eagle Technology, LLC, Melbourne, FL 32919 (US); Florida State University Research Foundation, Inc., Tallahassee, FL 32310 (US)
(72) Inventor: BOSSCHER, Paul, West Melbourne, 32904 (US); CLARK, Jonathan, Tallahassee, 32309 (US); HUBICKI, Christian, Tallahassee, 32303 (US)
(74) Representative: Schmidt, Steffen J.

(57) **Abstract**

A mobile platform (MP) and method for operating same. The MP comprising: a chassis which extends in a longitudinal direction from a back end to a front end and extends in lateral directions from a platform centerline to two opposing lateral sides (wherein the chassis comprises body parts configured to rotate relative to each other); limbs coupled to the chassis; and wheels connected to the limbs. Each limb is movable in a first direction towards the platform centerline and a second direction away from the platform centerline such that a stance of a front or rear pair of limbs can be selectively narrowed and widened.

## Description

### BACKGROUND

### Description of the Related Art

Unmanned ground vehicles (UGVs) are being used for an increasing number of tasks, including those involving site security, inspection, emergency response, law enforcement and intelligence/surveillance and reconnaissance (ISR). Consequently, mission objectives for UGVs can involve numerous operational requirements, many of which can be conflicting in nature. For example, UGVs should be highly mobile to not only facilitate mobility on obstacles and irregular terrain (e.g., climbing stairs) and small enough to fit into tight areas (e.g., going through doors and stairwells), but also have the ability to carry heavy payloads for extended periods of time).

### SUMMARY

This document concerns mobile platform(s). The mobile platform(s) comprise(s):a chassis which extends in a longitudinal direction from a back end to a front end and extends in lateral directions from a platform centerline to two opposing lateral sides (wherein the chassis comprises a plurality of body parts configured to rotate relative to each other); a plurality of limbs coupled to the chassis and a plurality of wheels respectively connected to the plurality of limbs. Each limb of the plurality of limbs is movable in a first direction towards the platform centerline and an opposing second direction away from the platform centerline such that a stance of a front or rear pair of limbs can be selectively narrowed and widened.

This document also concerns method(s) for controlling or operating a mobile platform. The method(s) comprise(s): causing, by a circuit, the mobile platform to traverse terrain; rotating a plurality of body parts of a chassis relative to each other as the mobile platform traverses the terrain (wherein the chassis extends in a longitudinal direction from a back end of the mobile platform to a front end of the mobile platform and extends in lateral directions from a platform centerline to two opposing lateral sides of the mobile platform); and narrowing or widening a stance between first and second limbs of the mobile platform by actuating at least a first mechanical joint provided at a first point of articulation between the chassis and an upper limb member of the first limb that is coupled to the chassis.

### BRIEF DESCRIPTION OF THE DRAWINGS

This disclosure is facilitated by reference to the following drawing figures, in which like numerals represent like items throughout the figures.
FIG. 1 provides an illustration of a system having a mobile platform.
FIG. 2 provides a side perspective view of the mobile platform of FIG. 1.
FIG. 3 provides a front view of the mobile platform shown in FIGS. 1-2.
FIGS. 4A-4C (collectively referred to as "FIG. 4") provides a series of illustrations that are useful for understanding movement of the mobile platform shown in FIGS. 1-3 for transitioning between a narrow stance and a wide stance.
FIG. 5 provides an illustration showing adjustable stances of the mobile platform of FIGS. 1-4.
FIG. 6 provides an illustration showing waist twisting of the mobile platform of FIGS. 1-5.
FIGS. 7A-7D (collectively referred to herein as "FIG. 7") provides illustrations showing a mobile platform traversing terrain in accordance with the present solution.
FIG. 8 provides an illustration showing the mobile platform with two roll joints and the mobile platform with one roll joint.
FIG. 9 provides an illustration showing tracks that were interchanged with the wheels of the mobile platform.
FIG. 10 provides a flow diagram of an illustrative method for operation and/or controlling a mobile platform.
FIG. 11 provides a block diagram of an illustrative computing device.

### DETAILED DESCRIPTION

It will be readily understood that the components of the systems and/or methods as generally described herein and illustrated in the appended figures could be arranged and designed in a wide variety of different configurations. Thus, the following more detailed description, as represented in the figures, is not intended to limit the scope of the present disclosure, but is merely representative of certain implementations in various different scenarios. While the various aspects are presented in the drawings, the drawings are not necessarily drawn to scale unless specifically indicated.

Unmanned ground vehicles (UGVs) need to be able to perform a variety of different tasks and operations without becoming unstable and tipping over. Various conventional approaches have been applied to solve this problem. For example, some conventional mobility platforms include wheels and tracks. These mobility platforms have relatively good endurance, payload capacity, speed, and mobility over different surfaces (e.g., mud and snow). However, they have relatively poor mobility on obstacles and in unstructured terrain. Other conventional mobility platforms include legs. These mobility platforms have relatively good mobility over different surfaces (e.g., mud and snow), on obstacles and in unstructured terrain. However, they have relatively poor endurance, payload capacity and speed. Therefore, current UGVs offer either mobility and agility or endurance and payload capacity, but not both.

The present solution provides a mobility platform implementing a hybrid limbed and wheeled approach that offers both of these things. The hybrid limbed and wheeled design comprise four limbs in two pairs (front and back), where the splay of the limbs can be altered by articulating the limbs outward away from the chassis. This enables obstacle climbing, an ability to widen the base width for stable off-road driving, and an ability to narrow the base width for tight spaces. In effect, the present solution has relatively good endurance, payload capacity, speed, improved obstacle climbing, and mobility in unstructured terrain. The solution is described below in greater detail.

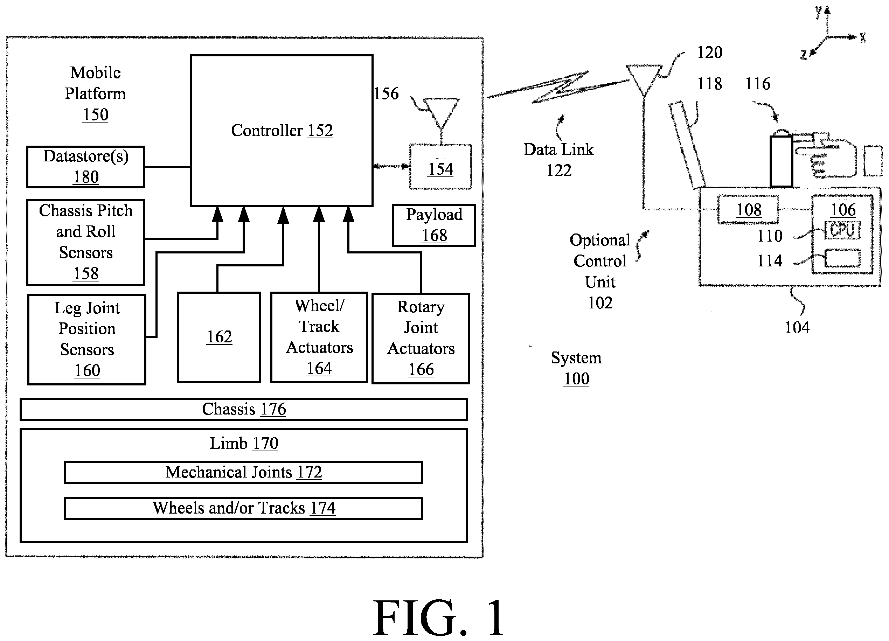

FIG. 1 provides a block diagram showing a system **100** that includes an optional control unit **102** and a mobile platform **150.** The illustration of the mobile platform **150** and control unit **102** is not drawn to scale. For example, the mobile platform **150** can be significantly larger than the control unit **102.** However, FIG. 1 is sufficient for understanding the present solution, and relationship between the two electronic components **102** and **150.**

The mobile platform **150** is a motorized vehicle that operates without an on-board human presence. The mobile platform **150** can be used in various applications, such as site security applications, inspection applications, search and rescue applications, emergency response applications, and/or ISR applications. The mobile platform **150** can include, but is not limited to, a UGV. The UGV can be used to, for example, transport a payload **168** to a particular destination location. The payload **168** can include, but is not limited to, an articulating arm. The mobile platform **150** may be configured to be autonomous, semi-autonomous, and/or remotely controllable via the control unit **102.** A data link **122** (e.g., a wireless data link) allows the control system **102** to communicate commands to the mobile platform **150,** and allows the control system **102** to receive information from the mobile platform **150.** For example, such information can include images from video cameras, haptic feedback data, and other information (e.g., battery related information) pertaining to the operational status of the mobile platform **150.**

The control unit **102** can include a user interface control **116,** data processing system **106,** and a data transceiver **108** to support the data link **122.** In some embodiments, user interface control **116** can sense hand movement along two or three linear directions of motion defined by orthogonal axes **x, y** and **z.** In this regard, the user interface control **116** can include, but is not limited to, a joystick. Forward movement of the joystick may cause forward movement of the mobile platform **150,** while backward movement of the joystick may cause backward movement of the mobile platform **150.** Right-side movement of the joystick may cause the mobile platform **150** to turn right, while left-side movement of the joystick may cause the mobile platform **150** to turn left. The present solution is not limited to this manner of controlling the mobile platform's movement. Any known or to be known vehicle motion control technique can be used herein.

Data processing system **106** includes a data processing hardware element **110.** The data processing element **110** can include, but is not limited to, a central processing unit (CPU) and/or an application specific integrated circuit (ASIC). The data processing system **106** can also include a memory or data storage device **114** for storing a set of instructions (e.g., software code). The instructions implement one or more of the methodologies, procedures, or functions described herein. The instructions can also reside, completely or at least partially, within the data processing element **110** during execution thereof thereby. The data processing element **110** and memory or data storage device **114** also can constitute machine-readable media.

The data processing system **106** may be fully integrated with the user interface control **116.** For example, the data processing system **106** could be integrated into a base **104** associated with the user interface control **116.** The data processing system **106** can be operatively connected to a display unit **118** for purposes of displaying video images. The display unit **118** may be integrated with the control system **106** as shown or separate from the control system **106.**

Data transceiver **108** is operatively coupled to the data processing system **106.** The data transceiver **108** can include any type of wired or wireless transceiver suitable for communicating data to and from a data transceiver **154** of the mobile platform **150.** If data transceivers **108, 154** are wireless devices then antennas **120, 156** can be respectively coupled to the data transceivers. A suitable wireless data link interface can be based on any of a variety of well-known wireless interface standards. Examples of such well known wireless interface standards can include the Bluetooth wireless standard, and the IEEE 802.11 family of standards. However, the invention is not limited in this regard and any other wireless interface standard can be used. Data communicated over the data link **122** can include motion control commands directed to mobile platform **150,** feedback data communicated from mobile platform **150** to the data processing system **106,** and video data communicated from the mobile platform **150** to the data processing system **106.**

The mobile platform **150** is a robot system capable of performing moving actions based on commands generated by an onboard controller **152** and/or telematic commands received from remote control unit **102.** Onboard controller **152** includes circuitry for generating motion control commands, processing received motion control commands, and/or communicating feedback data to the control unit **102.** The circuitry of the onboard controller **152** can include, but is not limited to, microprocessor(s), microcontroller(s), and/or ASIC(s). The circuitry of the onboard controller **152** is communicatively connected to datastore(s) **180** for accessing instructions and/or data useful for controlling operations of the mobile platform **150.** The on-board controller **152** is also configured to perform communication operations involving data transceiver **154.**

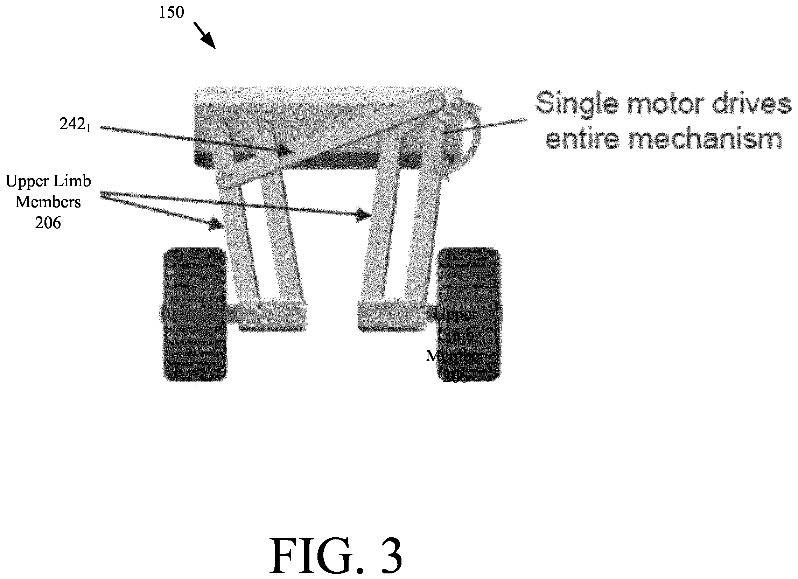

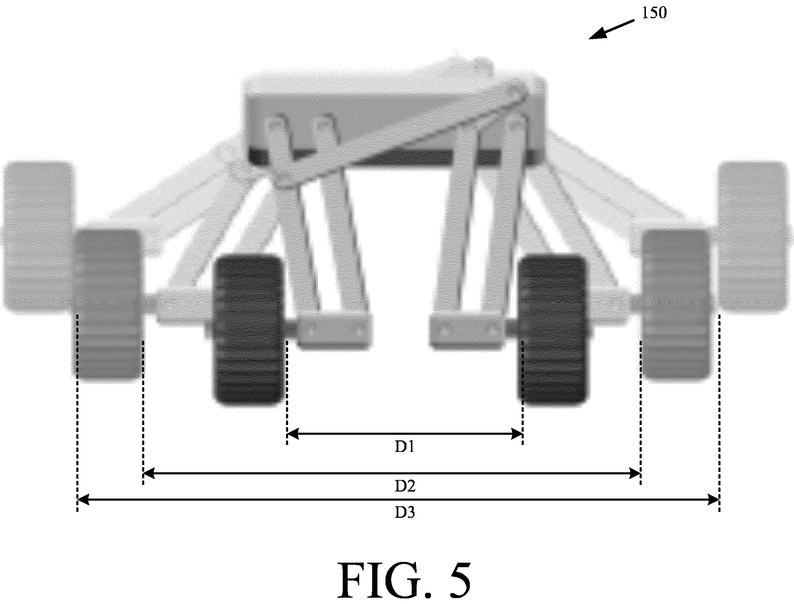

With reference to FIGS. 1-6, mobile platform **150** includes a chassis **176** with four limbs **170₁**, **170₂**, **170₃**, **170₄** (collectively referred to as limbs **170**) coupled thereto. Chassis **176** comprises body parts **210₁**, **212₁**, **212₂**, **210₂** that are coupled to each other. Body parts **210₁**, **210₂** are collectively referred to as **"210",** while body parts **212₁**, **212₂** are collectively referred to as **"212".** The body parts **210₁**, **212₁**, **212₂**, **210₂** are configured to act like a gimbal to allow movements thereof about a plurality of axes **250₁**, **250₂**, **254.** The present solution is not limited to the particular gimbal design shown in FIGS. 1-6. The body parts can have other designs which allow the chassis to act like a gimbal.

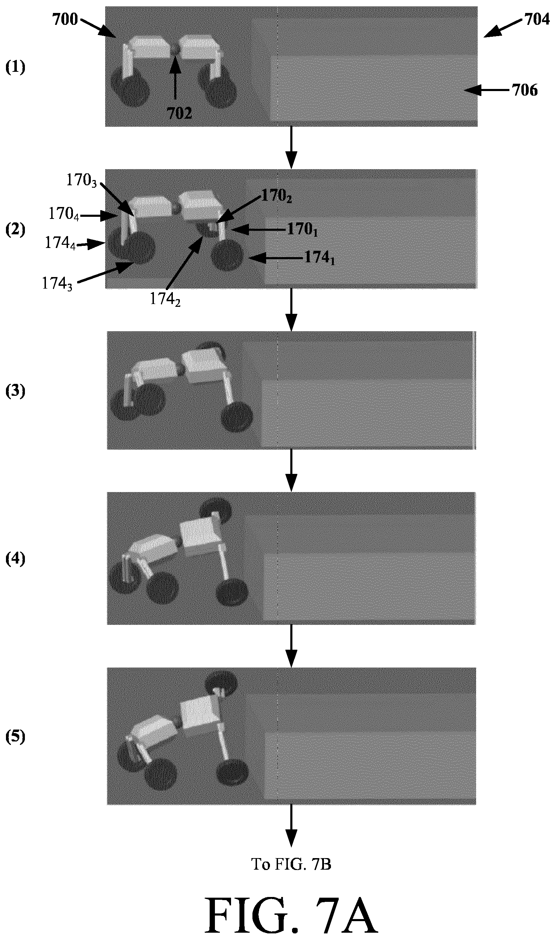

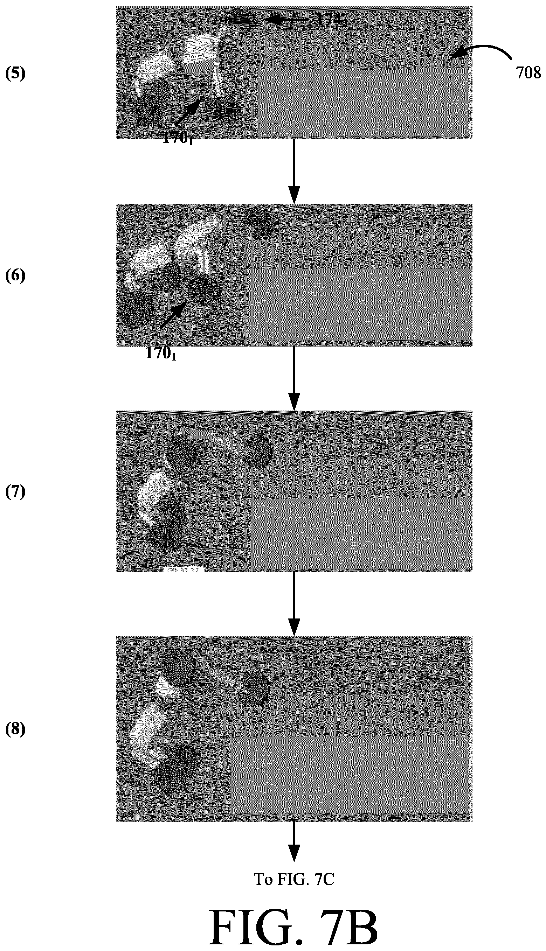

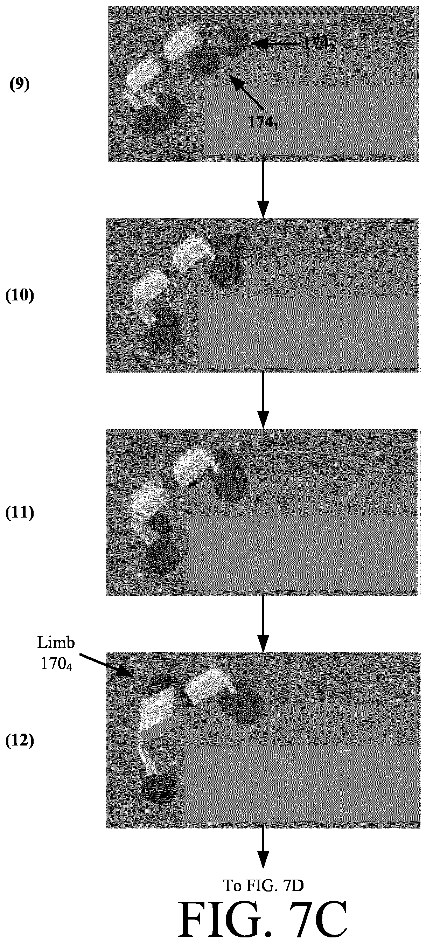

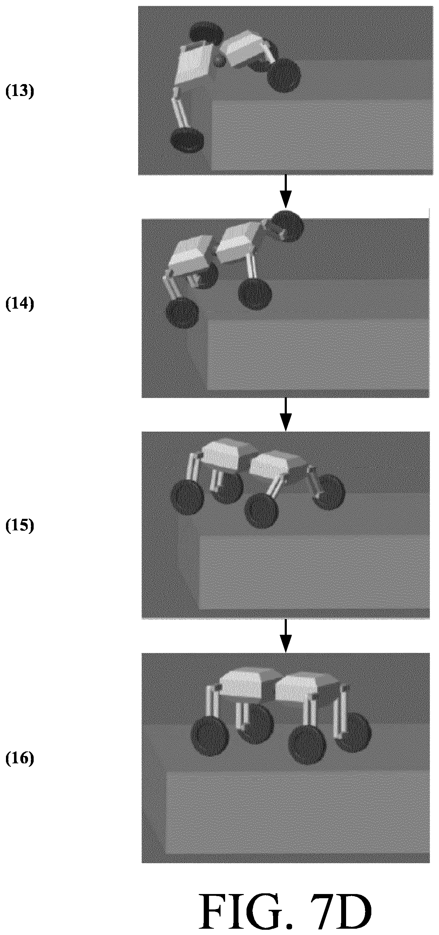

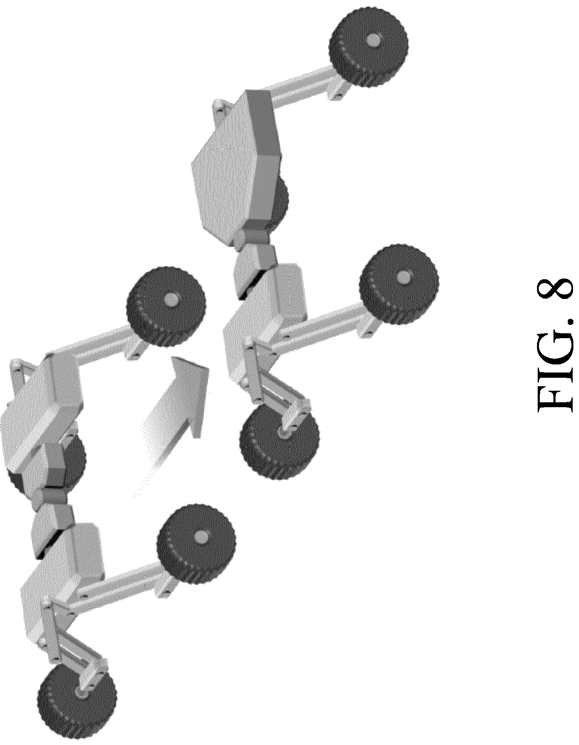

Although four body parts are shown in the drawings, the mobile platform can include any number of body parts selected in accordance with a given application. For example, the mobile platform can include three body parts as shown in FIG. 8 rather than four body parts as shown in FIGS. 1-6. In FIG. 8, body part **212₂** has been eliminated or removed from the mobile platform. Alternatively, a single body part **702** is provided as shown in FIG. 7. Body part **702** may comprise a ball for a ball and socket joint. The mobile platform may optionally be designed to allow the body parts **212₁**, **212₂** to be interchanged with body part **702.** The chassis design of FIGS. 1-6 is more robust and easier and simpler to actuate than the chassis design of FIG. 7.

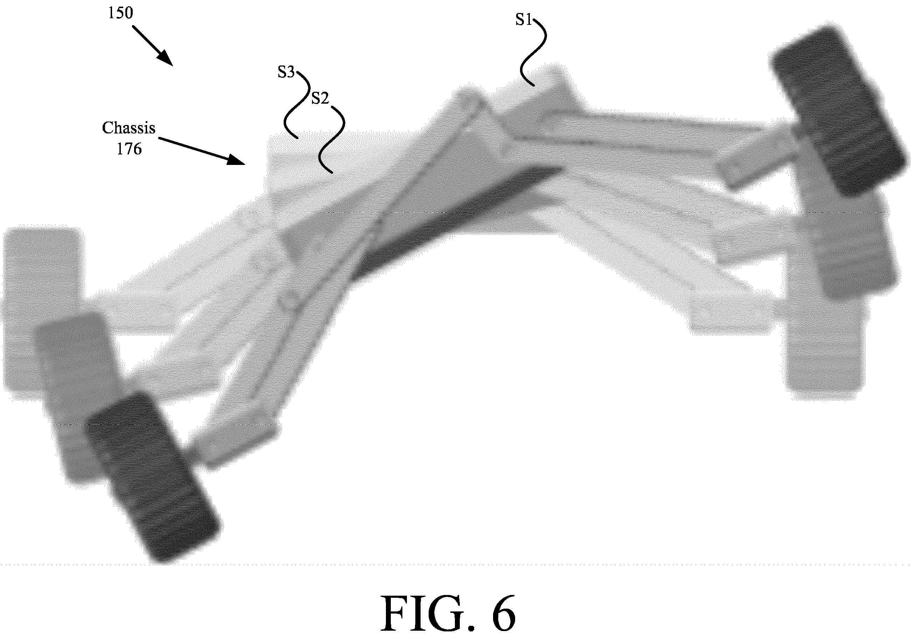

Each body part **210₁**, **212₁**, **212₂** and **210₂** is configured to be rotatable or twist about a platform centerline or horizontal center axis **250₁**, **250₂** independent and separate from any rotation of the other body parts. Additionally, each body part **212₁**, **212₂** is configured to rotate about a vertical center axis **254** which extends perpendicular to the horizonal center axis **250₁**, **250₂**. The rotation of all the body parts can be actively controlled by the controller **152** and/or control unit **102.** In some scenarios, one or more body parts can be passive provided that at least one other body part is actively controlled by controller **152** and/or control unit **102.** The rotating or twisting of the body parts facilitates the prevention of side-toppling of the mobile platform on uneven terrain as well as climbing obstacles as shown in FIG. 7. The rotation or twisting of the body parts can be achieved using, for example, motor(s), spring(s) and/or damper(s) on each rotary joint **260₁**, **260₂**, **262** between two adjacent body parts. The motors for rotary joints **260₁**, **260₂**, **262** can include, but are not limited to, servo motors. The rotation or twisting of the body parts allows the chassis to transition between different twist states **S1, S2, S3** as shown in FIG. 6. Machine learning algorithm(s) or model(s) can be used to autonomously control movement of the body parts relative to each other and relative to limb movements to reduce the likelihood of the mobile platform tipping over during operations. The machine learning algorithm(s) or model(s) can include, but are not limited to, neural networks.

Each body part **210₁**, **212₁**, **212₂** and **210₂** can rotate or pivot *N°* or less around each axis **250₁**, **250₂**, **254** in two opposing directions. **N** is any number between 1 and 360 selected in accordance with a given application. The body parts can be selectively configured at any time to rotate or pivot around each axis **250₁**, **250₂**, **254** by the same amount or by different amounts. For example, at a first time, all body parts are configured to rotate **N°** around an axis **250₁**, **250₂**. However, at a second time, body parts **210** is configured to rotate ***N₁°*** around an axis **250₁**, **250₂**, while body parts **212** are configured to rotate ***N₂°*** around an axis **250₁**, **250₂**. ***N₁*** is not equal to ***N₂.*** The amount of rotation of one or more body parts can be limited to ensure that (i) the front and/or (ii) the front limbs **170₁**, **170₂** do not contact the back limbs **170₃**, **170₄** during operation of the mobile platform.

Additionally or alternatively, the amount by which each body part rotates about each axis **250₁**, **250₂**, **254** can be changed, modified or otherwise adjusted during operation of the mobile platform based on sensor data and/or certain criteria. For example, ***N*** is changed from a first value to a different second value based on a change in one or more characteristics of the surrounding environment and/or terrain over which the mobile platform is traveling.

Each axis **250₁**, **250₂** extends from a center of the chassis to the front end **230** of the chassis **176** or a backend **232** of the chassis **176.** Axes **250₁**, **250₂** may be collectively referred to as "250". Axis **254** extends from a top side **234** of the chassis **176** to a bottom side **236** of the chassis **176.** Chassis pitch and roll sensors **158** provide chassis pitch and roll angle information to the controller **152** for use in controlling movement of the limbs **170** and/or body parts **210, 212.**

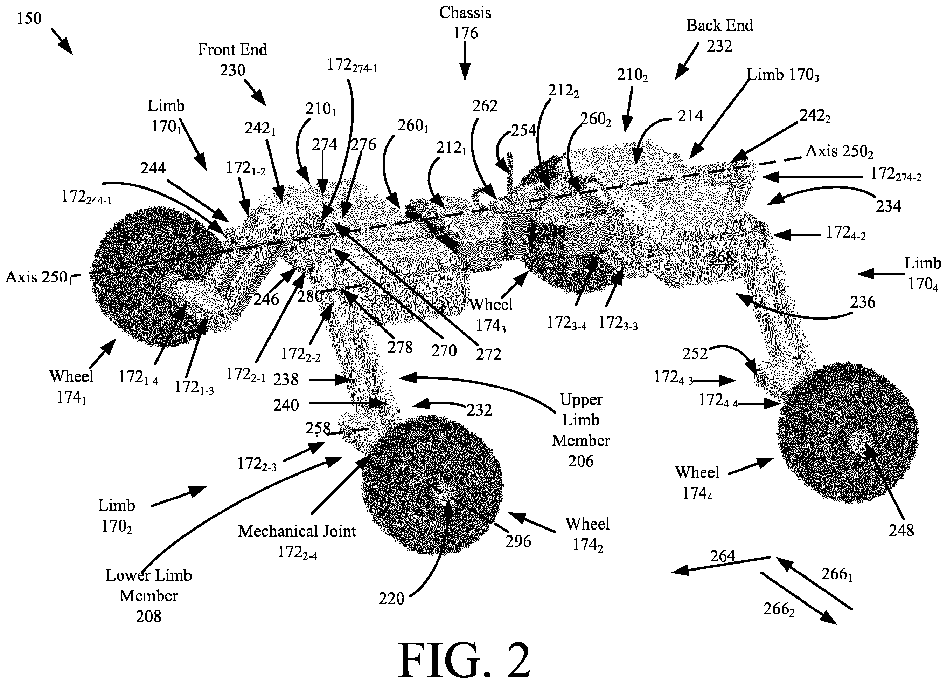

Each limb **170₁**, **170₂**, **170₃**, **170₄** has one or more mechanical joints **172.** For example, limb **170₁** comprises mechanical joints **172₁₋₁** (not visible in FIG. 2), **172₁₋₂**, **172₁₋₃**, **172₁₋₄**. Limb **170₂** comprises mechanical joints **172₂₋₁**, **172₂₋₂**, **172₂₋₃**, **172₂₋₄**. Limb **170₃** comprises mechanical joints **172₃₋₁**, **172₃₋₂** (not visible in FIG. 2), **172₃₋₃**, **172₃₋₄**. Limb **170₄** comprises mechanical joints **172₄₋₁** (not visible in FIG. 2), **172₄₋₂, 172₄₋₃**, **172₄₋₄**.

Drive mechanisms are provided to cause movement of the limbs **170.** For example, in some scenarios, a motor is provided for actuating each limb independently from the other limbs. However, the present solution is not limited to this design. For example, the mobile platform **150** can have the design shown in FIGS. 1-6 in which a first motor is provided to cause the concurrent or simultaneous actuation of the limbs **170₁**, **170₂** of the front pair and a second motor is provided to cause the concurrent or simultaneous actuation of the limbs **170₃**, **170₄** of the back pair. This reduced motor design is achieved, for example, using limb link members **242₁**, **242₂.** The present solution is not limited to the particular limb link member configurations shown in FIGS. 2-6. Other mechanisms can be used to achieve the same result of the concurrent or simultaneous actuation of the back or rear limbs. For example, telescoping member can be provided at the shoulders or points of articulations between the limbs and chassis.

Limb link member **242₁** is provided at the front end **230** of the chassis **176** and limb link member **242₂** is provided at the back end **232** of the chassis **176.** The limb link members **242₁**, **242₂** allow for the reduced total number of motors needed to actuate the limbs **170₁**, **170₂**, **170₃**, **170₄**. In this regard, limb link member **242₁** mechanically connects or links limbs **170₁** and **170₂** to each other, while limb link member **242₂** mechanically connects or links limbs **170₃** and **170₄** to each other. A first end **244** of limb link member **242₁** is pivotally connected to an outer bar **240** of an upper limb member **206** of limb **170₁**. A second end **246** of limb link member **242₁** is pivotally connected to an inner bar **238** of an upper limb member **206** of limb **170₂**. Similarly, a first end **244** of limb link member **242₂** is pivotally connected to an outer bar **240** of an upper limb member **206** of limb **170₃**. A second end **246** of limb link member **242₂** is pivotally connected to an inner bar **238** of an upper limb member **206** of limb **170₄**.

Each limb link member **242₁**, **242₂** comprises two bars **270, 272** pivotally connected to each other at adjacent ends **274, 276** thereof. The opposing end **244** of bar **272** is pivotally connected to the outer bar **240** of the upper limb member **206** of limb **170₁**. The opposing end **246** of bar **270** is pivotally connected to the inner bar **238** of an upper limb member **206** of limb **170₂**. This configuration allows for a single rotary joint actuator **166** to cause the simultaneous or concurrent movement of limbs **170₁** and **170₂** via rotation of outer bar **240** about mechanical joint **172₂₋₂**.

Each mechanical joint **172₁₋₁**, **172₁₋₂**, **172₂₋₁**, **172₂₋₂**, **172₂₋₁**, **172₂₋₂**, **172₄₋₁**, **172₄₋₂** is provided at the point of articulation between the chassis **176** and the respective bar **238, 240** of the respective upper limb member **206.** At each point of articulation, a proximal end **230** of the respective bar **238, 240** is rotatably or pivotably coupled to the chassis **176** via a coupling means **278.** Coupling means **278** can include, but is not limited to, an axel, a pin, a shaft, gear(s), and/or a ball and socket. Each bar **238, 240** of the upper limb member **206** can rotate 360° or less around an axis **280** which extends through the respective point of articulation. In this regard, an elongate body of the upper limb member **206** may extend parallel to axes **280** at a first time, extend perpendicular to axes **280** at a second time, and otherwise extend in a direction that is angled relative to axes **280** at a third time.

Each mechanical joint **172₁₋₃**, **172₁₋₄**, **172₂₋₃**, **172₂₋₄**, **172₃₋₃**, **172₃₋₄**, **172₄₋₃**, **172₄₋₄** is provided at a point of articulation where the respective upper limb member **206** meets the respective lower limb member **208.** At this point of articulation, a distal end **232** of the upper limb member **206** is rotatably or pivotably coupled to the lower limb member **208** via a coupling means **252.** Coupling means **252** can include, but is not limited to, an axel, a pin, a shaft, gear(s), and/or a ball and socket.

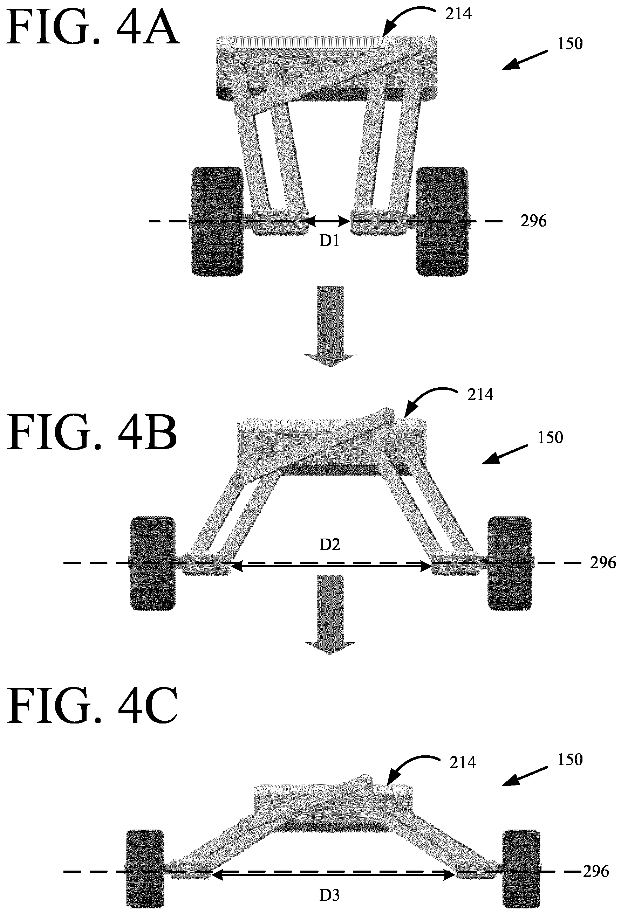

Each bar **238, 240** of the upper limb member **206** can rotate ***M***° around an axis **258** which extends through a respective point of articulation with the lower limb member **208. *M*** is any number between 1 and 180. If ***M*** is 180, then an elongate body of the upper and lower limb members **206, 208** may extend parallel to axis **250₁**, **250₂** at a first time, extend perpendicular to axis **250₁**, **250₂** at a second time, and otherwise extend in a direction that is angled relative to axis **250₁**, **250₂** at a third time. Illustrations are provided in FIGS. 4A-4C which show different relative positions of the mechanical joints due to rotations thereof. As seen in FIGS. 4A-4C, the distance between limbs of a given pair can be selectively narrowed to a value **D1** and selectively widened to a value **D2.** The distance can further be widened to a value **D3.** It should be noted that the upper and lower limb member design shown in FIGS 2-9 have a geometry similar to a parallelogram, where the distance between upper joints (e.g., **172₂₋₁** and **172₂₋₂**) and the distance between lower joints (e.g., **172**_{**2**-**3**} and **172₂₋₄**) are substantially equal and also the distance between joints on the inner link (e.g., **172₂₋₁** and **172₂₋₃**) and the distance between joints on the outer link (e.g., **172₂₋₂** and **172₂₋₄**) are substantially equal. This geometry allows a center axis **296** of each wheel **174₁**, **174₂**, **174₃**, **174₄** to remain parallel with the upper surfaces **214** of body parts **210₁**, **210₂** while traveling over any type of terrain.

Movement of at least mechanical joints **172₂₋₂**, **172₃₋₂** are controlled by controller **152** and/or control unit **102.** Rotary joint actuators **166** are provided to facilitate movement of the limbs **170** in accordance with motion control command signals. The rotary joint actuators **166** can include, but are not limited to, servo motors. Limb joint position sensors **160** provide position information with regard to one or more of the mechanical joints **172.** This position information is communicated from the limb joint position sensors **160** to the controller **152** and/or the control unit **102.** A limb joint position sensor can be provided at one or more mechanical joints of each leg in accordance with any given application. The mechanical joints of the legs are referenced by numbers **172₁₋₁**, **172₁₋₂**, **172₁₋₃**, **172₁₋₄**, **172₂₋₁**, **172₂₋₂**, **172₂₋₃**, **172₂₋₄**, **172₃₋₁**, **172₃₋₂**, **172₃₋₃**, **172₃₋₄**, **172₄₋₁**, **172₄₋₂**, **172₄₋₃**, **172₄₋₄**, **172₂₄₄₋₁**, **172₂₄₄₋₂** (not visible in FIG. 2), **172₂₇₄₋₁**, **172₂₇₄₋₂**.

The mobile platform **150** also includes other movable elements in the form of wheels and/or tracks **174.** In FIG. 2, each limb **170₁**, **170₂**, **170₃**, **170₄** of the mobile platform **150** comprises a wheel **174₁**, **174₂**, **174₃**, or **174₄** (collectively referred to as wheels **"174"**) pivotally connected thereto via a coupler **220.** Couplers **220** can include, but are not limited to, axels, pins, shafts, and/or gears. Each wheel **174₁**, **174₂**, **174₃**, **174₄** can rotate 360° in two opposing directions around a respective wheel pivot point **248.**

The mobile platform **150** further comprises wheel/track actuators **164.** The wheel/track actuators **164** can include, but are not limited to, variable-speed, reversible electric motors mounted inside the chassis **176.** Each wheel may be actively rotated via the wheel/track actuators **164.** In one scenario, one or more of the wheels can rotate freely. In another scenarios, none of the wheels can rotate freely. One of the actuators **164** may be coupled to wheel **174₁** so that activation of this motor causes wheel **174₁** to rotate. Another one of the actuators **164** may be coupled to the rear wheel **174₂** so that activation of this motor causes the wheel **174₂** to rotate. Yet another one of the actuators 164 may be coupled to the rear wheel **174₃** so that activation of this motor causes the wheel **174₃** to rotate, while another one of the actuators **164** may be coupled to the rear wheel **174₄** so that activation of this motor causes the wheel **174₄** to rotate. Movement of the wheels **174₁**, **174₂**, **174₃**, **174₄** by actuators **164** may be controlled by movement command signals from controller **152** and/or control unit **102.**

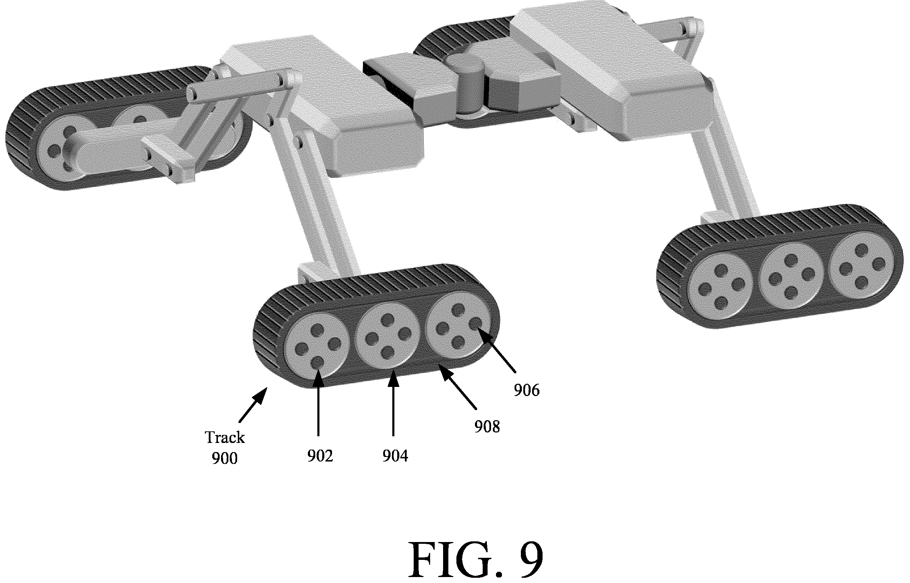

The wheels **174** may be optionally replaced or interchanged with a track **900** as shown in FIG. 9. Track **900** comprises wheels **902, 904, 906** coupled by way of a tread **908.** Rotation of wheel **904** drives the tread **908,** which in turn causes the outer wheels **902, 906** to rotate. Movement of the wheel **904** may be controlled by movement command signals from controller **152** and/or control unit **102.** The tracks **900** allow the mobile platform to be selectively configured for improved operation in soft soil, mud and/or snow.

Other sensors **162** may be provided with the mobile platform **150** to indicate movement of the wheels **174, 906.** Sensors **162** can include, but are not limited to, optical encoders, magnetic encoders, potentiometers, and resolvers. The outputs from the sensors **162** may be used by the controller **152** and/or control unit **102** for controlling movements of the mobile platform **150.** Sensors **162** may also include environmental sensors, camera(s), a lidar system, and/or a radar system. These sensors can be used to detect characteristics of a surrounding environments and/or detect objects in proximity to the mobile platform **150.** Any known or to be known object detection technique can be used here.

The position of the mobile platform **150** is controlled through the selective activation and deactivation of the actuators **164** in response to control inputs generated by controller **152** and/or control unit **102.** Linear or straight-line travel of the mobile platform **150** is effectuated by the simultaneous activation of actuators **164** in the same direction and at the same speed so as to drive wheels and tracks **174** in the same direction and at the same speed. Turning of the mobile platform **150** may be achieved by, for example: (1) simultaneously activating the actuators for wheels of the limbs **170₁**, **170₃** on a first side of the mobile platform **150** and actuators for wheels of the limbs **170₂**, **170₄** on a second side of the mobile platform **150** in opposite directions or in the same direction at different speeds; or (2) operating actuators for only one of the limbs.

FIGS. 7A-7D provide illustrations showing a series of movements of a mobile platform **700** over uneven terrain **704.** Mobile platform **150** is configured to move in a similar manner as mobile platform **700** shown in FIGS. 7A-7D. As shown in FIGS. 7A-7D, operations of the mobile platform **700** involve: (1) driving into proximity of an obstacle **706** of the terrain **704;** (2) twisting the body part(s) of the chassis around the platform centerline **250₁**, **250₂** and rotating limbs **170₂**, **170₃** outwards to lift wheels **174₂**, **174₃** off the ground; (3) further twist the body part(s) of the chassis around the platform centerline **250₁**, **250₂** and further rotate limbs **170₂**, **170₃** outwards to further lift wheels **174₂**, **174₃** off the ground; (4) rotating the body part(s) in a first direction about axis **254** such that the chassis has a bent configuration (i.e., the centerlines of the body parts **210₁**, **210₂** are angled relative to each other); (5) drive towards the obstacle **706** until the lifted wheel **174₂** comes in contact with a top surface **708** of the obstacle **706;** (6) rotate the body part(s) in an opposing second direction about axis **254** such that the chassis no longer has a bent configuration; (7) rotate the body part(s) around the platform centerline **250;** (8) drive forwards so that wheel **174₂** rolls on the top surface **708** of the obstacle **706** and wheels **174₃**, **174₄** move closer to the obstacle **706;** (9) rotate the body part(s) around the platform centerline **250** until wheel **174₁** comes in contact with the top surface **708** of the obstacle **706;** (10, 11) drive forwards so that wheels **174₁**, **174₂** roll on the top surface **708** of the obstacle **706;** (12, 13) rotate the body part(s) around axis **250₁**, **250₂** and axis **254** while widening the stance between limbs **170₂** and **170₄**; (13) drive forwards so that wheels **174₁**, **174₂**, **174₄** roll on the top surface **708** of the obstacle **706;** (14) continue to drive forwards so that wheel **174₃** comes in contact with and all four wheels roll on the top surface **708** of the obstacle **706;** and (15, 16) continue to drive forwards so that the mobile platform **700** drives on the top surface **708** of the obstacle **706.**

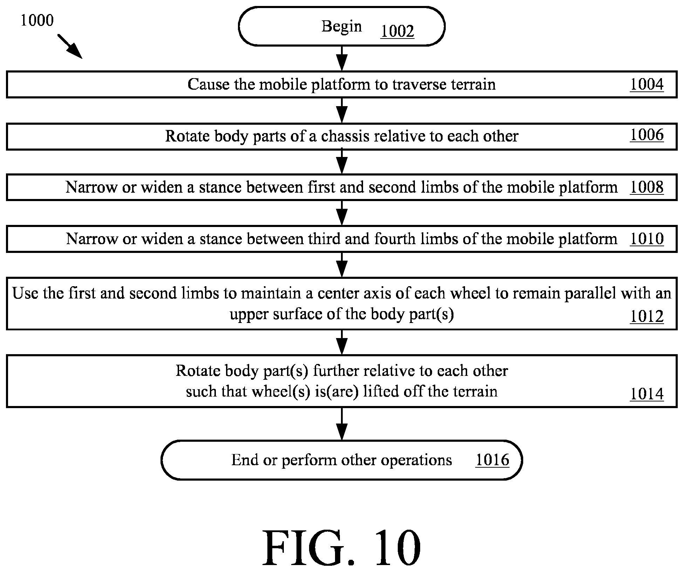

FIG. 10 provides a flow diagram of an illustrative method **2000** for controlling or otherwise operating a mobile platform (e.g., mobile platform **150** of FIGS. 1-6 or **700** of FIG. 7). Method **1000** begins with **1002** and continues with **1004** where a circuit (e.g., control unit **102,** controller **152,** actuators **164,** transceiver **154,** and/or wheels and/or tracks **174** of FIG. 1) cause the mobile platform to traverse terrain (e.g., terrain **704** of FIG. 7). This may be achieved, for example, by causing the mobile platform to travel forwards or backwards. Movement of the mobile platform can involve actuating one or more wheels (e.g., wheel **174₁**, **174₂**, **174₃** and/or **174₄** of FIGS. 1-2) connected to one or more limbs (e.g., limbs **170₁**, **170₂**, **170₃** and/or **170₄** of FIGS. 1-2) thereof. Actuation of each wheel may be performed independent of actuation of the other wheels. Additionally or alternatively, two or more of the wheels may be actuated simultaneously as a pair of wheels (e.g., a pair of the front wheels **174₁**, **174₂** or a pair of back wheels **174₃**, **174₄**).

Next in **1006,** body parts (e.g., body parts **210₁**, **210₂**, **212₁** and/or **212₂** of FIGS. 2-6) of a chassis (e.g., chassis **176** of FIGS. 2-6) are rotated relative to each other as the mobile platform traverses the terrain. As such, the body parts may rotate while the mobile platform is driving over the terrain, while the mobile platform is climbing over the terrain, and/or while the mobile platform is stationary on the terrain. The chassis extends in a longitudinal direction (e.g., direction **264** of FIG. 2) from a back end (e.g., back end **232** of FIG. 2) of the mobile platform to a front end (e.g., front end **230** of FIG. 2) of the mobile platform and extends in lateral directions (e.g., directions **266₁, 266₂** of FIG. 2) from a platform centerline (e.g., line **250** of FIG. 2) to two opposing lateral sides (e.g., lateral sides **268** of FIG. 2) of the mobile platform.

The rotation of the body parts may involve actuating a first rotational joint (e.g., rotational joint **260₁** or **260₂** of FIG. 2) with a rotational joint axis (e.g., axis **290** of FIG. 2) oriented along the platform centerline (e.g., line **250** of FIG. 2) and actuating a second rotational joint (e.g., rotational joint **262** of FIG. 2) with a rotational joint axis (e.g., axis **254** of FIG. 2) orientated perpendicular to the platform centerline. In this way, the body parts may roll and yaw with respect to each other. The term "roll", as used here, refers to rotational, twisting and/or oscillating movement around or about axis **290.** The term "yaw", as used here, refers to rotational, twisting and/or oscillating movement around or about axis **254.** Axis **290** may be referred to as a roll axis, while axis **254** may be referred to as a yaw axis.

In 1008, a stance between first and second limbs (e.g., limbs **170₂** and **170₁** of FIG. 2) of the mobile platform is narrowed or widened. This can be achieved by actuating at least a first mechanical joint (e.g., mechanical joint **172₂₋₂** of FIG. 2) provided at a first point of articulation between the chassis and an upper limb member (e.g., upper limb member **206** of FIG. 2) of the first limb (e.g., limb **170₂** of FIG. 2) that is coupled to the chassis. The narrowing or widening of the stance may be achieved by movement of the first limb (e.g., limb **170₂** of FIG. 1) in a first direction towards or away (e.g., direction **266₁** or **266₂** of FIG. 2) from the platform centerline (e.g., line **250** of FIG. 2) and movement of the second limb (e.g., limb **170₁** of FIG. 1) in an opposing second direction (e.g., direction **266₁** or **266₂** of FIG. 2). The movement of the first limb is motorized movement. A linkage (e.g., limb link members **242₁** or **242₂** of FIG. 2) may be provided so that the motorized movement of the first limb is used to also cause the movement of the second limb to concurrently occur. In this way, movement of the second limb may be responsive to and caused by movement of the first limb.

The operations of blocks **1006** and **1008** may be performed sequentially or at the same time. In the later case, the mobile platform may climb onto an obstacle (e.g., obstacle **706** of FIG. 7) rather than drive onto the obstacle. The mobile platform may continue to climb over the obstacle or drive on the obstacle depending on the obstacle's characteristics (e.g., shape, size and/or surface texture).

In **1010,** a stance between third and fourth limbs (e.g., limbs **170₄**, **170₃** of FIG. 2) of the mobile platform is narrowed or widened. This can be achieved by actuating at least a second mechanical joint (e.g., mechanical joint **172₄₋₂** of FIG. 2) provided at a second point of articulation between the chassis and an upper limb member (e.g., upper limb member **206** of FIG. 2) of the third limb (e.g., limb **170₄** of FIG. 2) that is coupled to the chassis. The first and second limbs may comprise a first pair of limbs, and the third and fourth limbs comprise a second pair of limbs. The stance of the front pair of limbs may be narrowed and widened independent from the narrowing or widening of the stance of a second pair of limbs.

In **1012,** the first and second limbs are used to maintain a center axis (e.g., center axis **296** of FIG. 2) of each wheel (e.g., wheel **174₁**, **174₂**, **174₃** or **174₄** of FIG. 2) to remain parallel with an upper surface (e.g., upper surface **214** of FIG. 2) of at least one body part (e.g., body part **210₁** and/or **210₂** of FIG. 2) while the mobile platform travels over terrain. **1014** involves rotating the body part(s) of the chassis further relative to each other such that one or more wheels are lifted off the terrain over which the mobile platform is traveling. Subsequently, method **1000** continues with **1026** where it ends or other operations are performed (e.g., return to **1002**).

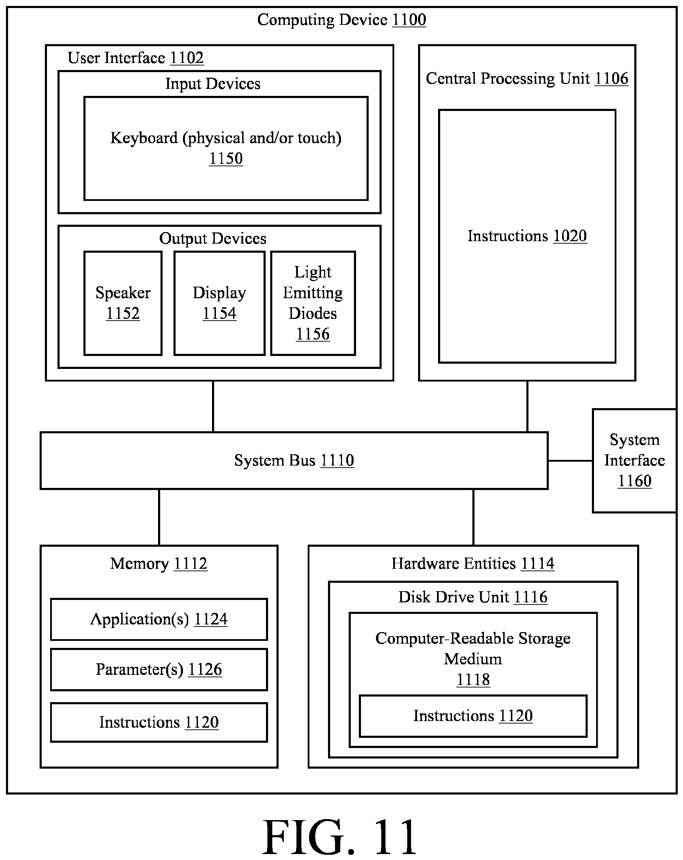

Referring now to FIG. 11, there is provided an illustration of an illustrative architecture for a computing device **1100.** The controller **106** of FIG. 1 and/or controller **152** of FIG. 1 is/are the same as or similar to computing device **1100.** As such, the discussion of computing device **1100** is sufficient for understanding the controllers **106, 152** of FIG. 1.

Computing device **1100** may include more or less components than those shown in FIG. 10. However, the components shown are sufficient to disclose an illustrative solution implementing the present solution. The hardware architecture of FIG. **11** represents one implementation of a representative computing device configured to operate a vehicle, as described herein. As such, the computing device **1100** of FIG. **11** implements at least a portion of the method(s) described herein.

Some or all components of the computing device **1100** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. **11****,** the computing device **1100** comprises a user interface **1102,** a central processing unit (CPU) **1106,** a system bus **1110,** a memory **1112** connected to and accessible by other portions of computing device **1100** through system bus **1110,** a system interface **1160,** and hardware entities **1114** connected to system bus **1110.** The user interface can include input devices and output devices, which facilitate user-software interactions for controlling operations of the computing device **1100.** The input devices include, but are not limited to, a physical and/or touch keyboard **1150.** The input devices can be connected to the computing device **1100** via a wired or wireless connection (e.g., a Bluetooth^{®} connection). The output devices include, but are not limited to, a speaker **1152,** a display **1154,** and/or light emitting diodes **1156.** System interface **1160** is configured to facilitate wired or wireless communications to and from external devices (e.g., network nodes such as access points, etc.).

At least some of the hardware entities **1114** perform actions involving access to and use of memory **1112,** which can be a random access memory (RAM), a disk drive, flash memory, a compact disc read only memory (CD-ROM) and/or another hardware device that is capable of storing instructions and data. Hardware entities **1114** can include a disk drive unit **1116** comprising a computer-readable storage medium **1118** on which is stored one or more sets of instructions **1120** (e.g., software code) configured to implement one or more of the methodologies, procedures, or functions described herein. The instructions **1120** can also reside, completely or at least partially, within the memory **1112** and/or within the CPU **1106** during execution thereof by the computing device **1100.** The memory **1112** and the CPU **1106** also can constitute machine-readable media. The term "machine-readable media", as used here, refers to a single medium or multiple media (e.g., a centralized or distributed database, and/or associated caches and servers) that store the one or more sets of instructions **1120.** The term "machine-readable media", as used here, also refers to any medium that is capable of storing, encoding or carrying a set of instructions **1120** for execution by the computing device **1100** and that cause the computing device **1100** to perform any one or more of the methodologies of the present disclosure.

As evident from the above discussion, the present solution concerns mobile platforms. The mobile platforms may comprise: a chassis which extends in a longitudinal direction from a back end to a front end and extends in lateral directions from a platform centerline to two opposing lateral sides, the chassis comprising a plurality of body parts configured to rotate relative to each other; a plurality of limbs coupled to the chassis (wherein each limb comprises an upper limb member, a lower limb member, at least one first mechanical joint provided at a first point of articulation between the chassis and the upper limb member, and at least one second mechanical joint provided at a second point of articulation where the upper limb member meets the lower limb member); and a plurality of wheels connected to the low limb members of the limbs. Each limb is movable in a first direction towards the platform centerline and an opposing second direction away from the platform centerline such that a stance of a front or rear pair of limbs can be selectively narrowed and widened. The stance of the front pair of limbs may be narrowed and widened independent from any narrowing or widening of the stance of the rear pair of limbs.

The body parts may be joined by at least one rotational joint. The body parts may comprise a front body part, a rear body part, and at least one intermediary body part connected between the front and rear body parts. The chassis may comprise a first rotational joint with a rotational joint axis oriented along the platform centerline and a second rotational joint with a rotational joint axis orientated perpendicular to the platform centerline, whereby the plurality of body parts can roll and yaw with respect to each other. The first and second rotational joints may be motorized.

The mobile platforms may also comprise a mechanical coupling between first and second limbs of the front or rear pair such that if the first limb is articulated in a first direction towards or away from the platform centerline of the chassis the second limb moves in an opposing second direction. For example, a first limb link member may be provided that mechanically links first and second limbs of the front pair so that actuation of the first limb causes the concurrent or simultaneous actuation of the second limb, and a second limb link member may be provided to mechanically link third and fourth limbs of the rear pair so that actuation of the third limb causes the concurrent or simultaneous actuation of the fourth limb.

The wheels maybe independently actuated. The wheels may be interchangeable with tracks or are configured to have tracks installed thereon. The upper and lower limb members may be configured to allow a center axis of each of the plurality of wheels to remain parallel with an upper surface of at least one of the plurality of body parts while the mobile platform travels over terrain.

The above described mobile platforms have a novel configuration of system elements. The unique mechanical design enables unique mobility performance - traditional wheeled mobility, adjustable width for varying terrain stability, and whole-body movement for stepping and climbing over obstacles. The present solution achieves a combination mobility, endurance and payload capacity. The mobile platforms are able to: perform off-road driving with wheels that is relatively efficient; capable of carrying relatively heavy payloads because the primary mobility mode is wheeled driving rather than walking; and has an advanced mobility achieved with whole-body movement that provides an ability to traverse a relatively wide range of obstacles.

Reference throughout this specification to features, advantages, or similar language does not imply that all of the features and advantages that may be realized should be or are in any single embodiment. Rather, language referring to the features and advantages is understood to mean that a specific feature, advantage, or characteristic described in connection with a particular implementation is included in at least one embodiment. Thus, discussions of the features and advantages, and similar language, throughout the specification may, but do not necessarily, refer to the same embodiment.

Furthermore, the described features, advantages and characteristics disclosed herein may be combined in any suitable manner. One skilled in the relevant art will recognize, in light of the description herein, that the disclosed systems and/or methods can be practiced without one or more of the specific features. In other instances, additional features and advantages may be recognized in certain scenarios that may not be present in all instances.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

Although the systems and methods have been illustrated and described with respect to one or more implementations, equivalent alterations and modifications will occur to others skilled in the art upon the reading and understanding of this specification and the annexed drawings. In addition, while a particular feature may have been disclosed with respect to only one of several implementations, such feature may be combined with one or more other features of the other implementations as may be desired and advantageous for any given or particular application. Thus, the breadth and scope of the disclosure herein should not be limited by any of the above descriptions. Rather, the scope of the invention should be defined in accordance with the following claims and their equivalents.

## Claims

1. A mobile platform, comprising:
a chassis which extends in a longitudinal direction from a back end to a front end and extends in lateral directions from a platform centerline to two opposing lateral sides, the chassis comprising a plurality of body parts configured to rotate relative to each other;
a plurality of limbs coupled to the chassis; and
a plurality of wheels respectively connected to the plurality of limbs;
wherein each limb of the plurality of limbs is movable in a first direction towards the platform centerline and an opposing second direction away from the platform centerline such that a stance of a front or rear pair of limbs can be selectively narrowed and widened.

2. The mobile platform according to claim 1, wherein the body parts are joined by at least one rotational joint.

3. The mobile platform according to claim 1, wherein the body parts comprise a front body part, a rear body part, and at least one intermediary body part connected between the front and rear body parts.

4. The mobile platform according to claim 1, wherein the chassis comprises a first rotational joint with a rotational joint axis oriented along the platform centerline and a second rotational joint with a rotational joint axis orientated perpendicular to the platform centerline, whereby the plurality of body parts can roll and yaw with respect to each other.

5. The mobile platform according to claim 4, wherein the first and second rotational joints are motorized.

6. The mobile platform according to claim 1, further comprising a mechanical coupling between first and second limbs of the front or rear pair such that if the first limb is articulated in a first direction towards or away from the platform centerline of the chassis the second limb moves in an opposing second direction.

7. The mobile platform according to claim 1, further comprising a first limb link member mechanically linking first and second limbs of the front pair so that actuation of the first limb causes the concurrent or simultaneous actuation of the second limb, and a second limb link member mechanically linking third and fourth limbs of the rear pair so that actuation of the third limb causes the concurrent or simultaneous actuation of the fourth limb.

8. The mobile platform according to claim 1, wherein the stance of the front pair of limbs is configured to be narrowed and widened independent from any narrowing or widening of the stance of the rear pair of limbs.

9. The mobile platform according to claim 1, wherein each of the plurality of wheels is independently actuated.

10. The mobile platform according to claim 1, wherein the plurality of wheels are interchangeable with tracks or are configured to have tracks installed thereon.
